# EUROPÄISCHE PATENTANMELDUNG

(11) **EP 1 213 491 A1**
(43) Veröffentlichungstag der Anmeldung: **12.06.2002**
(21) Anmeldenummer: 01250419.7
(22) Anmeldetag: 29.11.2001
(51) Int. Cl.: F16B 9/02

(54) **Verbindung zwischen einem Profilträger und einem Wekzeugträger**

(30) Priorität: 05.12.2000 DE 10061341
(71) Anmelder: Demag Cranes & Components GmbH, 58300 Wetter (DE)
(72) Erfinder: Nerger, Klaus, 47506 Neukirchen-Vluyn (DE)
(74) Vertreter: Meissner, Peter E., Dipl.-Ing.

(57) **Zusammenfassung**

Die Erfindung betrifft eine Lastmomentenstütze für ein an einem Ende eines Aluminiumlängsprofils zu befestigendes Anschlusselement. Um eine hochbelastbare Lastmomentenstütze zu schaffen, die am stirnseitigen Ende eines Aluminiumlängsprofils befestigbar ist, wird vorgeschlagen, dass am Ende des Aluminiumlängsprofils (2) dessen Außenseiten (3) von einem Rahmen umschlossen sind und der Rahmen an allen vier Außenseiten (3) spielfrei anliegt, dass der Rahmen an zwei einander gegenüberliegenden Außenseiten (3) je eine unterste Anlagefläche, die jeweils auf Höhe der Stirnseite des Aluminiumlängsprofils (2) verläuft, und an den beiden anderen einander gegenüberliegenden Außenseiten (3) jeweils zumindest eine zur Stirnseite des Aluminiumlängsprofils (2) bündig angeordnete Kippkante (10) aufweist, und dass das an der Stirnseite befestigte Anschlusselement (6) spielfrei an der Stirnseite, an jeder Kippkante (10) und an den untersten Anlageflächen des Rahmens anliegt und zumindest an diesen Anlageflächen befestigt ist.

## Beschreibung

Die Erfindung betrifft eine Lastmomentenstütze für ein an einem Ende eines Aluminiumlängsprofils zu befestigendes Anschlusselement gemäß dem Oberbegriff des Anspruchs 1.

Es ist allgemein bekannt, beispielsweise Werkzeuge über eine Lastmomentenstütze in Form einer Flanschplatte stirnseitig an einem Hubbalken zu befestigen. So ist in der DE 43 42 716 A1 eine Hubachse mit einem Hubbalken gezeigt, an dem unter Zwischenschaltung einer Flanschplatte stirnseitig ein Parallelgreifer befestigt ist. Die Flanschplatte wird üblicherweise stirnseitig am Hubbalken angeschweißt.

Der Nachteil einer derartigen Befestigung der Lastmomentenstütze besteht darin, dass diese nicht auf einen Hubbalken aus einem Aluminiumlängsprofil übertragbar ist.

Aufgabe der Erfindung ist es, eine hochbelastbare Lastmomentenstütze vorzuschlagen, die am stirnseitigen Ende eines Aluminiumlängsprofils befestigbar ist.

Die Lösung dieser Aufgabe ist durch die im Anspruch 1 angegebenen Merkmale gegeben. Durch die kennzeichnenden Merkmale der Unteransprüche ist die Lastmomentenstütze in vorteilhafter Weise weiter ausgestaltet.

Die Lösung sieht vor, dass am Ende des Aluminiumlängsprofils dessen Außenseiten von einem Rahmen umschlossen sind und der Rahmen an allen vier Außenseiten spielfrei anliegt, dass der Rahmen an zwei einander gegenüberliegenden Außenseiten je eine unterste Anlagefläche, die jeweils auf Höhe der Stirnseite des Aluminiumlängsprofils verläuft, und an den beiden anderen einander gegenüberliegenden Außenseiten jeweils zumindest eine zur Stirnseite des Aluminiumlängsprofils bündig angeordnete Kippkante aufweist, und dass das an der Stirnseite befestigte Anschlusselement spielfrei an der Stirnseite, an jeder Kippkante und an den untersten Anlageflächen des Rahmens anliegt und zumindest an diesen Anlageflächen befestigt ist. Der Vorteil dieser Lastmomentenstütze besteht darin, dass das Anschlusselement mittels einer Schraube als Befestigungsmittel befestigbar ist, die aufgrund der Ausführung nur auf Zug längs der Schraube beansprucht wird. Alle Querkräfte werden von den Außenseiten des Aluminiumlängsprofils über die Anlageflächen der Drehmomentenstütze aufgenommen.

In einer speziellen konstruktiv einfachen Ausführung ist es vorgesehen, dass der Rahmen aus zwei Grundelementen und an den Grundelementen angeordneten fest miteinander verbundenen Querelementen gebildet ist, dass die Grundelemente mit ihrer Anlagefläche an zwei einander gegenüberliegenden Außenseiten des Aluminiumlängsprofils spielfrei anliegen, dass die Querelemente Anlageflächen aufweisen, welche spielfrei an den beiden anderen einander gegenüberliegenden Außenseiten des Aluminiumlängsprofils anliegen, dass je ein Querelement des einen Grundelements mit je einem Querelement des anderen Grundelements fest verbunden ist, wobei an jeder Außenseite zumindest zwei beabstandete Querelementpaare vorgesehen sind, von denen jeweils das unterste Paar auf Höhe der Stirnseite des Aluminiumlängsprofils verläuft, dass jedes Grundelement die zumindest eine zur Stirnseite des Aluminiumlängsprofils bündig angeordnete Kippkante aufweist, dass das an der Stirnseite befestigte Anschlusselement spielfrei an der Stirnseite, an jeder Kippkante und an den beiden unteren Querelementpaaren anliegt und zumindest an den unteren Querelementpaaren befestigt ist.

Zur spielfreien und sicheren Anlage des Anschlusselements ist dieses an der Stirnseite des Aluminiumlängsprofils mittels einer Schraube befestigt.

Bei einer konstruktiv einfachen Ausführung der Lastmomentenstütze sind die Grundelemente und die Querelemente plattenförmig ausgebildet. Die Querelemente liegen dabei vorzugsweise in quer zu den Grundelementen verlaufenden parallelen Ebenen.

Um die Übertragung der einzuleitenden Kräfte mittels der Lastmomentenstütze in das Aluminiumlängsprofil sicherzustellen, sind die Querelemente vorzugsweise mittels Schrauben fest miteinander verbunden.

Zur Erzielung eines hinreichenden Formschlusses wird unter Berücksichtigung von Herstellungstoleranzen vorgeschlagen, dass die an dem Grundelement auf gleicher Höhe angeordneten Querelemente jeweils zu einander konisch angestellt sind.

In einer konstruktiv sehr einfachen Ausführung sind die Grundelemente aus einem Blech gebildete und die auf derselben Seite angeordneten Querelemente jeweils um 90° zum Grundelement gebogen.

Eine einfach herzustellende und kostengünstige Ausführung der Lastmomentenstütze besteht aus zwei identischen U-förmigen Elementen, die im montierten Zustand ineinandergreifend am Aluminiumlängsprofil angeordnet sind.

Zur Verbesserung der Spielfreiheit weist jedes unterste Paar miteinander verbundener Querelemente vor der Befestigung des Anschlusselements einen spaltförmigen Freiraum zum Anschlusselement auf, der mit der Befestigung unter einer verbleibenden elastischen Kraftbeaufschlagung geschlossen wird. Dabei wird das Anschlusselement elastisch vorgespannt gegen die Kippkanten der Grundelemente und die Stirnseite des Aluminiumlängsprofils gezogen.

Zur Vereinfachung der Montage wird vorgeschlagen, dass das Aluminiumlängsprofil Längsnuten aufweist, die zur Befestigung der Grundelemente mittels Nutensteinen dienen.

Ein Ausführungsbeispiel der Erfindung ist in der Zeichnung dargestellt und wird nachfolgend näher beschrieben. Es zeigen:
- Fig. 1: eine Hubachse mit einer am anderen Ende des Hubbalken-Aluminiumlängsprofis angeordnete Lastmomentenstütze in räumlicher Darstellung,
- Fig. 2: die Lastmomentenstütze gemäß Fig. 1 in vergrößerter Darstellung,
- Fig. 3: die Lastmomentenstütze gemäß Fig. 2 in einer Vorderansicht,
- Fig. 4: die Lastmomentenstütze gemäß Fig. 3 in einer Seitenansicht und
- Fig. 5: einen Querschnitt durch die Hubachse gemäß der Schnittlinie I-I in Fig. 4 und
- Fig. 6: einen Längsschnitt durch die Hubachse gemäß der Schnittlinie II-II in Fig. 4.

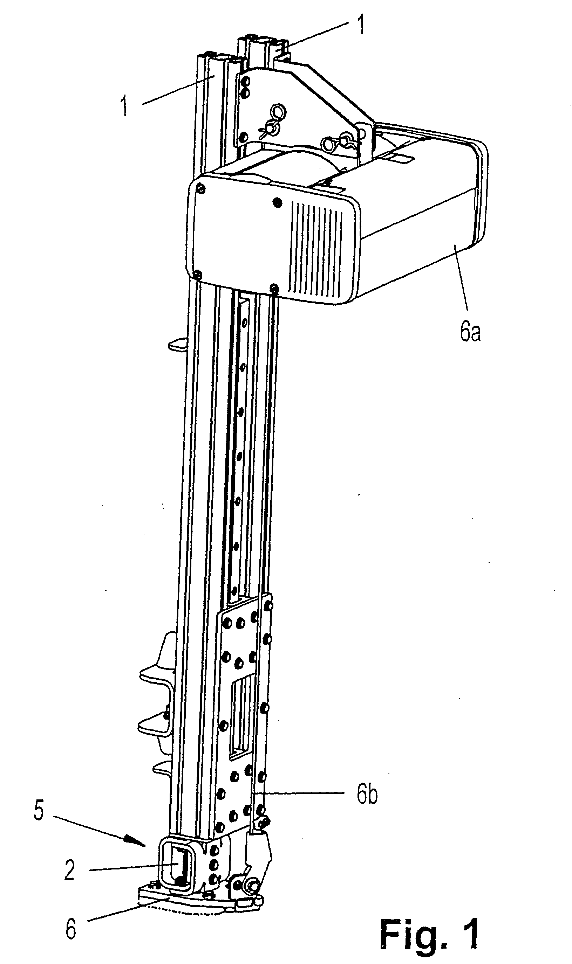

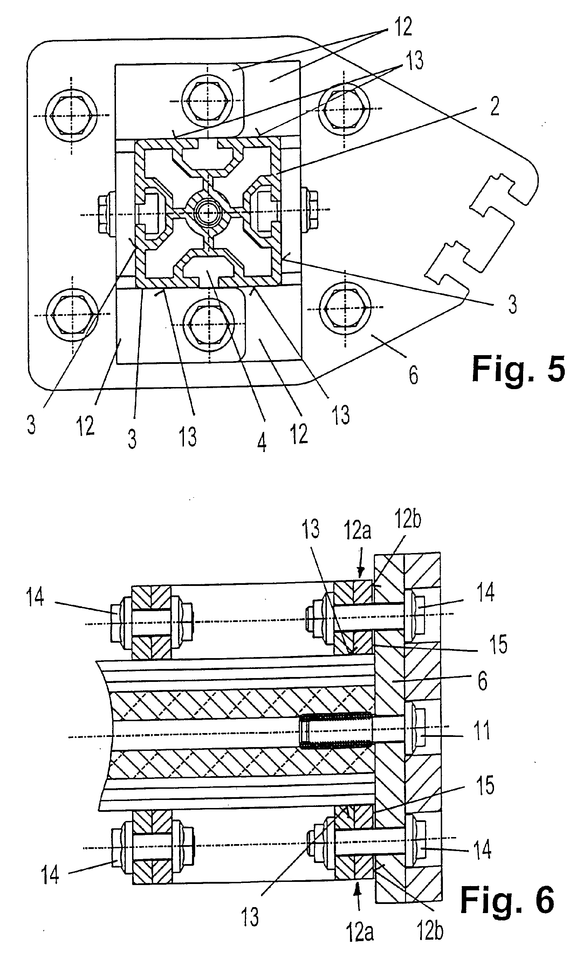

Fig. 1 zeigt eine Hubachse mit zwei beabstandeten parallelen Längsträgern 1, die aus jeweils einem Aluminiumlängsprofil gebildet sind. Zwischen den beiden Längsträgern 1 ist ein Hubbalken 2a längs verschiebbar, der ebenfalls aus einem Aluminiumlängsprofil 2 gebildet ist und an seinen Außenseiten 3 eine Vielzahl von parallelen Längsnuten 4 (s. Fig. 5) aufweist. Am - bezogen auf Fig. 1 -unteren Ende des Hubbalkens 2a ist eine Lastmomentenstütze 5 angeordnet, an der eine Anschlussplatte als Anschlusselement 6 stirnseitig befestigt ist. An das Anschlusselement 6 kann beispielsweise ein quer zum Hubbalken 2 verlaufender Träger befestigt werden. Der Hubbalken 2 ist mittels eines Seilbalancers 6a verfahrbar, dessen Seil 6b mit seinem freien Ende am Anschlusselement 6 befestigt ist.

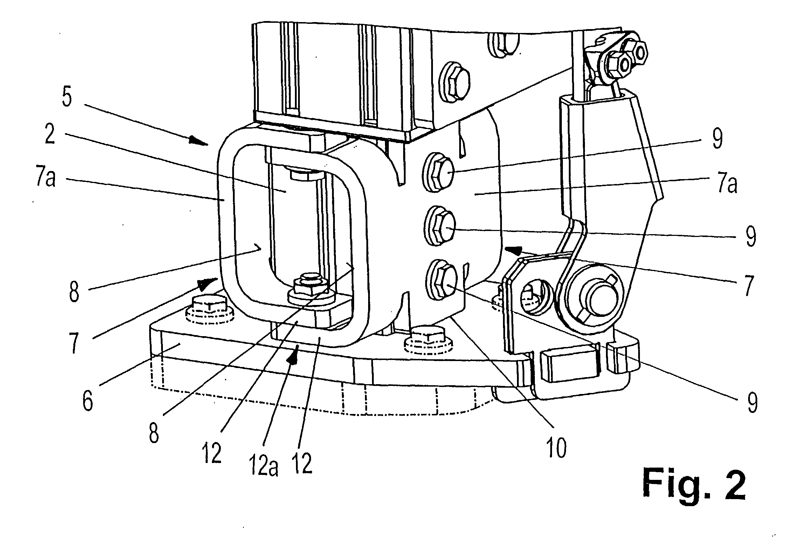

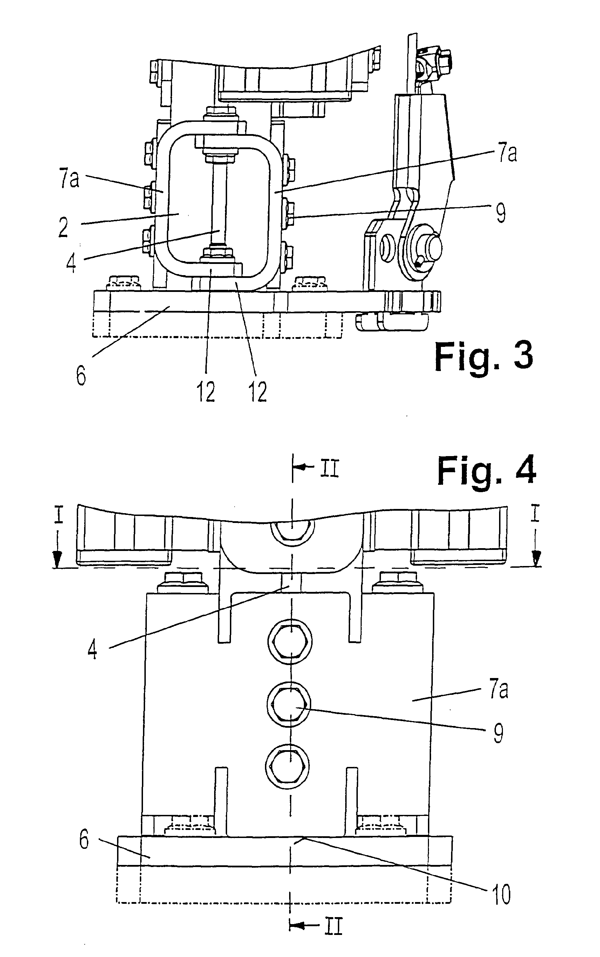

Fig. 2 zeigt die Lastmomentenstütze 5 gemäß Fig. 1 in einer vergrößerten Darstellung; Fig. 3 und 4 zeigen die Lastmomentenstütze gemäß Fig. 2 in einer Vorder- und in einer Seitenansicht. Die Lastmomentenstütze ist aus zwei u-förmigen Elementen 7 gebildet, die aus je einem Blech hergestellt sind und ineinandergreifend das Aluminiumlängsprofil 2 umfassen.

Jedes u-förmige Elemente 7 besteht aus zwei plattenförmigen Grundelementen 7a, die parallel zu einander angeordnet sind und an zwei einander gegenüberliegenden Außenseiten 3 des Aluminiumlängsprofils 2 spielfrei anliegen. Zur Anlage weisen die Grundelemente 7a je eine Anlagefläche 8 auf. Die Befestigung im Sinne eines Anheftens der Grundelemente erfolgt mittels Nutensteinen 9 oder Nutensteinleisten, die die zugehörigen Längsnuten 4 hintergreifen. Diese Befestigung wird nahezu nicht belastet; sie dient vorwiegend der Vereinfachung der Montage. Wie Fig. 2 - Fig. 4 zeigen, verlaufen die Anlageflächen 8 der beiden Grundelemente 7a parallel zueinander. Dem Anschlusselement 6 zugewandt ist am Grundelement 7a eine am Anschlusselement 6 flächig anliegende Kippkante 10 ausgebildet, und zwar an jedem Grundelement 7a zumindest eine Kippkante 10, die sich zumindest über einen Teil der Grundelementbreite erstreckt. Die Kippkanten 10 (Anlageflächen) verlaufen bündig zur Stirnseite des Aluminiumlängsprofils 2. Das Anschlusselement 6 ist mittels einer zentralen im wesentlichen die gesamten Lastkräfte aufnehmenden Schraube 11 an der Stirnseite des Aluminiumlängsprofils 2 befestigt.

Jedes der u-förmigen Elemente 7 weist auf den beiden anderen Außenseiten 3 des Aluminiumlängsprofils 2 einander gegenüberliegende Querelemente 12 auf. Diese laschenartigen Querelemente 12 sind durch Biegung um 90° gegenüber dem Grundelement 7a aus dem Blech hergestellt. Die den Außenflächen 3 des Aluminiumlängsprofils 2 zugewandten Innenflächen liegen als Anlageflächen 13 (s. Fig. 5 und Fig. 6) spielfrei an den beiden zugewandten Außenseiten 3 des Aluminiumlängsprofils 2 an. Weiter ist jedes Querelement 12 des einen Grundelements 7a mit je einem Querelement 12 des gegenüberliegenden Grundelements 7a mit einer Schraube 14 fest verbunden. Die Lastmomentenstütze weist also vier Querelementepaare auf, von denen sich auf einer Außenseite 3 jeweils zwei befinden. Dabei ist, wie Fig. 6 zeigt, das sich am Anschlusselement 6 befindliche Querelementepaar 12a zusätzlich mit dem Anschlusselement 6 verschraubt, und zwar so, dass die die beiden Querelemente 12 verbindende Schraube 14 gleichzeitig das Anschlusselement 6 an das Quereleentepaar 12a festschraubt. Fig. 6 zeigt weiter, dass das unterste Querelementepaar 12a mit seiner zum Anschlusselement 6 gerichteten Anlagefläche 12b etwa bündig auf Höhe der Stirnseite des Aluminiumlängsprofils 2 verläuft. Allerdings ist in Fig. 6 auch ein spaltförmiger Freiraum 15 zu entnehmen, der bei vollständiger Verschraubung unter einer verbleibenden elastischen Kraftbeaufschlagung geschlossen wird, so dass das Anschlusselement 6 gegen die Kippkante 10 gezogen wird und damit spielfrei anliegt. Fig. 6 zeigt den Zustand unmittelbar vor dem festen Anziehen der Schrauben 14.

Somit liegt das montierte Anschlusselement 6 aufgrund der Verschraubung (Schraube 11) stets spielfrei an der Stirnseite des Aluminiumlängsprofils 2.

Um Herstellungstoleranzen besser ausgleichen zu können, ist es zweckmäßig, die beiden Anlageflächen 13 aufeinander konisch zulaufen zu lassen.

Selbstverständlich können die Querelemente 12 auch beliebig anders ausgebildet sein. So ist es zum Beispiel denkbar, die Querelemente 12 an den Grundelementen 7a anzuschweißen oder aber die u-förmigen Elemente 7 zu gießen, so dass die Querelemente 12 an den Grundelementen 7a angegossen sind.

Das Ausführungsbeispiel zeigt im wesentlichen einen Rahmen, der aus zwei Grundelementen 7a und an den Grundelementen 7a angeordneten miteinander verbundenen Querelementen 12 gebildet ist. Der Rahmen umschließt am Ende des Aluminiumlängsprofils 2 dessen Außenseiten 3 und liegt an allen vier Außenseiten 3 spielfrei an. An zwei einander gegenüberliegenden Außenseiten 3 weist er je eine unterste Anlagefläche (des Querelementepaars 12a) und an den beiden anderen einander gegenüberliegenden Außenseiten 3 jeweils zumindest eine zur Stirnseite des Aluminiumlängsprofils 2 bündig angeordnete Kippkante 10 auf. Die unterste Anlagefläche verläuft jeweils auf Höhe der Stirnseite des Aluminiumlängsprofils 2. Das an der Stirnseite befestigte Anschlusselement 6 liegt spielfrei an der Stirnseite, an jeder Kippkante 10 und an den untersten Anlageflächen des Rahmens an und ist zumindest an diesen befestigt

### Bezugszeichenliste:

- 1: Längsträger
- 2: Aluminiumlängsprofil
- 2a: Hubbalken
- 3: Außenseite
- 4: Längsnut
- 5: Lastmomentenstütze
- 6: Anschlusselement
- 6a: Seilbalancer
- 6b: Seil
- 7: Element
- 7a: Grundelement
- 8: Anlagefläche
- 9: Nutenstein
- 10: Kippkante
- 11: Schraube
- 12: Querelement
- 12a: Querelementepaar
- 12b: Anlagefläche
- 13: Innenfläche
- 14: Schraube
- 15: Freiraum

## Patentansprüche

1. Lastmomentenstütze für ein an einem Ende eines Aluminiumlängsprofils zu befestigendes Anschlusselement, insbesondere für einen quer zum Aluminiumlängsprofil verlaufenden Träger,
**dadurch gekennzeichnet,**
**dass** am Ende des Aluminiumlängsprofils (2) dessen Außenseiten (3) von einem Rahmen umschlossen sind und der Rahmen an allen vier Außenseiten (3) spielfrei anliegt,
**dass** der Rahmen an zwei einander gegenüberliegenden Außenseiten (3) je eine unterste Anlagefläche, die jeweils auf Höhe der Stirnseite des Aluminiumlängsprofils (2) verläuft, und an den beiden anderen einander gegenüberliegenden Außenseiten (3) jeweils zumindest eine zur Stirnseite des Aluminiumlängsprofils (2) bündig angeordnete Kippkante (10) aufweist, und
**dass** das an der Stirnseite befestigte Anschlusselement (6) spielfrei an der Stirnseite, an jeder Kippkante (10) und an den untersten Anlageflächen des Rahmens anliegt und zumindest an diesen Anlageflächen befestigt ist.

2. Lastmomentenstütze nach Anspruch 1,
**dadurch gekennzeichnet,**
**dass** der Rahmen aus zwei Grundelementen (7a) und an den Grundelementen (7a) angeordneten fest miteinander verbundenen Querelementen (12) gebildet ist,
**dass** die Grundelemente (7a) mit ihrer Anlagefläche (12b) an zwei einander gegenüberliegenden Außenseiten (3) des Aluminiumlängsprofils (2) spielfrei anliegen,
**dass** die Querelemente (12) Anlageflächen (13) aufweisen, welche spielfrei an den beiden anderen einander gegenüberliegenden Außenseiten (3) des Aluminiumlängsprofils (2) anliegen,
**dass** je ein Querelement (12) des einen Grundelements (7a) mit je einem Querelement (12) des anderen Grundelements (7a) fest verbunden ist, wobei an jeder Außenseite (3) zumindest zwei beabstandete Querelementpaare (12a) vorgesehen sind, von denen jeweils das unterste Paar auf Höhe der Stirnseite des Aluminiumlängsprofils (2) verläuft,
**dass** jedes Grundelement (7a) die zumindest eine zur Stirnseite des Aluminiumlängsprofils (2) bündig angeordnete Kippkante (10) aufweist,
**dass** das an der Stirnseite befestigte Anschlusselement (6) spielfrei an der Stirnseite, an jeder Kippkante (10) und an den beiden unteren Querelementpaaren (12a) anliegt und zumindest an den unteren Querelementpaaren (12a) befestigt ist.

3. Lastmomentenstütze nach einem der vorhergehenden Ansprüche,
**dadurch gekennzeichnet,**
**dass** das Anschlusselement (6) an der Stirnseite des Aluminiumlängsprofils (2) festgeschraubt ist.

4. Lastmomentenstütze nach einem der vorhergehenden Ansprüche,
**dadurch gekennzeichnet,**
**dass** die Grundelemente (7a) und die Querelemente (12) plattenförmig sind.

5. Lastmomentenstütze nach einem der vorhergehenden Ansprüche,
**dadurch gekennzeichnet,**
**dass** die Querelemente (12) mittels Schrauben (14) fest miteinander verbunden sind.

6. Lastmomentenstütze nach einem der vorhergehenden Ansprüche,
**dadurch gekennzeichnet,**
**dass** die an einem Grundelement (7a) auf gleicher Höhe angeordneten Querelemente (12) jeweils zueinander konisch angestellt sind.

7. Lastmomentenstütze nach einem der vorhergehenden Ansprüche,
**dadurch gekennzeichnet,**
**dass** die Grundelemente (7a) aus einem Blech gebildet und die Querelemente (12) jeweils um 90 Grad zum Grundelement (7a) gebogen sind.

8. Lastmomentenstütze nach einem der vorhergehenden Ansprüche,
**dadurch gekennzeichnet,**
**dass** die beiden jeweils aus dem Grundelement (7a) und den Querelementen (12) gebildeten u-förmigem Elemente (7) im montierten Zustand ineinandergreifend am Aluminiumlängsprofil (2) angeordnet sind.

9. Lastmomentenstütze nach einem der vorhergehenden Ansprüche,
**dadurch gekennzeichnet,**
**dass** jedes unterste Querelementepaar (12a) vor der Befestigung des Anschlusselements (6) einen spaltförmigen Freiraum (15) zum Anschlusselement (6) aufweist, der mit der Befestigung unter einer verbleibenden elastischen Kraftbeaufschlagung geschlossen wird.

10. Lastmomentenstütze nach einem der vorhergehenden Ansprüche,
**dadurch gekennzeichnet,**
**dass** das Aluminiumlängsprofil (2) Längsnuten (4) aufweist, die zur Befestigung der Grundelemente (7a) mittels Nutensteinen dienen.
